# EUROPÄISCHE PATENTSCHRIFT

(11) **EP 4 699 202 B1**
(45) Veröffentlichungstag und Bekanntmachung des Hinweises auf die Patenterteilung: **26.08.2026**
(21) Anmeldenummer: 24725828.8
(22) Anmeldetag: 10.05.2024
(51) Int. Cl.: H02J 7/70, H02J 50/00, H02J 50/10, H02J 50/90

(54) **LADEVORRICHTUNG ZUM INDUKTIONSLADEN EINES MOBILEN ENDGERÄTS SOWIE KRAFTFAHRZEUG MIT EINER SOLCHEN LADEVORRICHTUNG UND BETRIEBSVERFAHREN FÜR DIE LADEVORRICHTUNG**
CHARGING DEVICE FOR THE INDUCTION CHARGING OF A MOBILE TERMINAL, MOTOR VEHICLE WITH A CHARGING DEVICE OF THIS TYPE AND OPERATING METHOD FOR THE CHARGING DEVICE
DISPOSITIF DE CHARGE POUR LA CHARGE PAR INDUCTION D'UN TERMINAL MOBILE, VÉHICULE À MOTEUR DOTÉ D'UN DISPOSITIF DE CHARGE DE CE TYPE ET PROCÉDÉ DE FONCTIONNEMENT DU DISPOSITIF DE CHARGE

(30) Priorität: 17.05.2023 DE 102023113098
(43) Veröffentlichungstag der Anmeldung: 25.02.2026
(73) Patentinhaber: AUDI AG, 85057 Ingolstadt (DE)
(72) Erfinder: THIEL, Holger, 85139 Wettstetten (DE); WEISS, Simon, 85135 Titting (DE)
(74) Vertreter: Hofstetter, Schurack & Partner
(86) Internationale Anmeldenummer: PCT/EP2024/062932
(87) Internationale Veröffentlichungsnummer: WO 2024/235851

(56) Entgegenhaltungen:
- EP-B1- 2 946 050
- KR-A- 20120 117 262
- US-A1- 2012 262 002

## Beschreibung

Die Erfindung betrifft eine Ladevorrichtung zum Induktionsladen eines mobilen Endgeräts, beispielsweise eines Smartphones oder eines Tablet-PCs. Die Ladevorrichtung kann beispielsweise Bestandteil einer sogenannten Docking-Station sein, wie sie z.B. in einer Mittelkonsole eines Kraftfahrzeugs bereitgestellt sein kann. Um das mobile Endgerät ablegen zu können, weist die Ladevorrichtung eine Auflageplatte auf, von der ausgehend mittels einer elektrischen Sendespule (Ladespule) ein magnetisches Wechselfeld für das Induktionsladen erzeugt werden kann. Um die Sendespule bezüglich des Endgeräts in der Position zu justieren, ist eine Magnetanordnung bereitgestellt, wie es beispielsweise gemäß dem Standard Qi2 ^{™} vorgesehen sein kann. Zu der Erfindung gehören auch ein Kraftfahrzeug mit der Ladevorrichtung sowie ein Betriebsverfahren, gemäß welchem die Ladevorrichtung betrieben werden kann.

Um ein portables mobiles Endgerät, wie beispielsweise ein Smartphone oder einen Tablet-PC, mit elektrischer Energie kabellos nachladen oder versorgen zu können, kann in eine Ladevorrichtung eine elektrische Sendespule oder Ladespule für Induktionsladen integriert sein. Dies erspart das Anstecken des Endgeräts an einen Ladestecker. Eine Ladevorrichtung zum Induktionsladen kann zusätzlich eine Magnetordnung aufweisen, beispielsweise eine Kreisringanordnung aus Magneten oder zumindest eine Kreisbogenanordnung (Teilkreis) aus solchen Magneten, um eine Lage oder Position des Endgeräts bezüglich der Sendespule fixieren oder vorgeben zu können. Bekannte Standards hierzu sind MagSafe^{(™)} und Qi2^{(™)}.

Im mobilen Endgerät befindet sich die elektrische Empfangsspule für das Induktionsladen in der Regel auf der Rückseite, das heißt der dem Hauptbildschirm abgewandten Wandung des Endgeräts. Zusammen mit der Empfangsspule kann in dieser Wandung auch eine korrespondierende Magnetanordnung integriert sein, um die beschriebene magnetische Fixierung der Empfangsspule bezüglich der Sendespule sicherstellen zu können.

Ein Problem heutiger mobiler Endgeräte ist, dass deren Rückseite, also die rückseitige Wandung mit der darin integrierten Empfangsspule, oftmals nicht plan oder eben ist, sondern beispielsweise aufgrund einer Größe einer Kamera, keine ebene Auflagefläche gegeben ist. Legt man also das Endgerät mit seiner Rückseite auf eine Auflageplatte einer Ladevorrichtung, so wird es dort nicht plan auf der Auflageplatte aufliegen, sondern z.B. durch die Kamera eine gekippte Stellung einnehmen. Entsprechend ergibt sich ein Luftspalt zwischen der rückseitigen Wandung des Endgeräts und der Auflageplatte. Über diesen Luftspalt hinweg muss das magnetische Wechselfeld von der Sendespule der Ladevorrichtung hin zur Empfangsspule übertragen werden, was zu einer Reduktion in der Energieeffizienz führt. Zudem wird durch den Luftspalt die magnetische Haltekraft zu gering, um das Telefon in der gewünschten Position zu halten.

Ladevorrichtungen mit ebenen Ladeplatten sind beispielsweise aus der DE 11 2020 003 590 T5 und US 2020/0083726 A1 bekannt. Bei diesen Ladevorrichtungen wird das Problem einer überstehenden Kamera dadurch gelöst, dass die Auflageplatte kleiner als die rückseitige Wandung des Endgeräts ist, sodass die Kamera über die Auflageplatte überstehen kann. Dies reduziert allerdings den Halt des Endgerät in der Ladevorrichtung.

Die KR 10 2012 0 117 262 A offenbart einen drahtlosen Energiesender für Fahrzeuge zur Abstimmung einer Position einer ersten Spule innerhalb eines Gehäuses mit der Position einer zweiten Spule unter Verwendung einer mechanischen Einrichtung. Hierzu fixiert oder löst eine Positionsfixierungsvorrichtung selektiv eine Position einer Übertragungsspuleneinheit, die in dem Gehäuse angeordnet ist und die erste Spule und einen Magneten umfasst, entsprechend der Benutzersteuerung. Die Ladungsenergie wird durch induktive Kopplung der ersten Spule und der zweiten Spule einer Ladungszielvorrichtung beispielsweise einem mobilen Endgeräts zugeführt. Ein weiterer Magnet ist an der Ladungszielvorrichtung angebracht. Die Übertragungsspuleneinheit ist also nur innerhalb des Gehäuses beweglich, wobei jedoch eine Auflageplatte, auf der die Ladungszielvorrichtung zum Laden abgelegt wird, eine Oberfläche des Gehäuses darstellt. Somit kann eine Schieflage der Ladungszielvorrichtung auf der Auflageplatte, wodurch eine Energieübertragung durch einen gebildeten Luftspalt zwischen Ladungszielvorrichtung und Auflageplatte behindert sein kann, durch diese Vorrichtung nicht kompensiert werden.

Die EP 2 946 050 B1 offenbart eine Vorrichtung zur drahtlosen Übertragung von elektrischer Leistung und elektrischen Signalen, umfassend eine an einer mechanischen Struktur, insbesondere in einem Gehäuse oder einem Verkleidungsteil angebrachte erste elektrische Komponente, wobei die erste elektrische Komponente beweglich gehalten ist und Betätigungsmittel zur relativen Bewegung der ersten elektrischen Komponente vorgesehen sind, wobei die Betätigungsmittel dazu eingerichtet sind, in Abhängigkeit von der Lage einer zweiten elektrischen Komponente in Bezug auf die mechanische Struktur durch eine Bewegung der ersten elektrischen Komponente die elektromagnetische Kopplung zwischen der ersten und der zweiten elektrischen Komponente zu verbessern, wobei zumindest eine der elektrischen Komponenten in einem Einbaukasten drehbar gelagert ist, wobei zur Aufnahme der elektrischen Komponenten eine im Einbaukasten drehbar gelagerte Wanne vorgesehen ist, und Betätigungsmittel zur Positionierung der Wanne im Einbaukasten vorgesehen sind. Mit anderen Worten sind beide zu kontaktierende Komponenten fest verbaut, beispielsweise in einer Tür (erste Komponente dann im Türstock und die zweite Komponente im Türblatt oder umgekehrt) und beide Komponenten sind in der drehbar gelagerten Wanne angeordnet.

Die US 2015/0270046 A1 offenbart eine elektronische Vorrichtung, die Folgendes umfasst: ein Gehäuse, das eine Verbindungsfläche definiert; und ein magnetisches Element, das angrenzend an die Verbindungsfläche und innerhalb des Gehäuses angeordnet ist, wobei das magnetische Element so konfiguriert ist, dass es das Gehäuse zu einer benachbarten äußeren Oberfläche ausrichtet, indem es entweder das Gehäuse oder die äußere Oberfläche relativ zueinander bewegt, um eine ausgerichtete Position zu erreichen; und das magnetische Element ferner so konfiguriert ist, dass es einer Trennung des Gehäuses von der äußeren Oberfläche widersteht, wenn sich das Gehäuse und die äußere Oberfläche in der ausgerichteten Position befinden. Es kann allerdings kein Luftspalt überbrückt werden, wie er durch eine hervorstehende Kamera verursacht werden kann.

Die WO 2014/157840 A1 offenbart eine drahtlose Energieübertragungsvorrichtung und ein damit ausgestattetes Fahrzeug, wobei die drahtlose Energieübertragungsvorrichtung umfasst: eine Sendeeinheit zum Übertragen eines drahtlosen Energiesignals an eine drahtlose Energieempfangsvorrichtung; und eine Aufwärtsantriebseinheit zum Antreiben der Sendeeinheit nach oben. Insbesondere ist konstruktiv ein Energieübertragung hin zu unterschiedlich großen Endgeräte vorgesehen.

Die DE 10 2018 201 300 A1 offenbart eine Ladevorrichtung zum drahtlosen Aufladen eines elektrischen Energiespeichers eines mobilen Endgeräts, wobei die Ladevorrichtung ein Gehäuse mit Ladeelektronik, mit einem Auflagebereich für das mobile Endgerät und mit einer Lufteintrittsöffnung und mit einer eine Luftaustrittsöffnung, wobei die Ladevorrichtung eine Luftfördereinrichtung aufweist, zum Ansaugen von Luft durch die Lufteintrittsöffnung anzusaugen, zum Durchlaufenlassen eines Luftförderungspfades durch die Luftförderungseinheit und zum Ausblasen der Luft durch eine Luftaustrittsöffnung, also eine Kühleinrichtung für eine Ladevorrichtung.

Die US 2012/0262002 A1 zeigt Systeme und Verfahren zur Ausrichtung einer drahtlosen Energieübertragungsantenne in Elektrofahrzeugen, wobei ein Sensor vorgesehen ist, der die Stärke eines elektromagnetischen Feldes in mehreren Dimensionen erfasst, und ein Prozessor, der auf Grundlage der Sensordaten mindestens eine Richtung oder Position eines gesendeten Beaconsignals ermittelt.

Der Erfindung liegt die Aufgabe zugrunde, auch bei einer Ladevorrichtung mit Auflageplatte, auf der das gesamte Endgerät aufliegen können soll, einen effizienten induktiven Ladevorgang zu ermöglichen.

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figuren beschrieben.

Als eine Lösung sieht die Erfindung eine Ladevorrichtung zum Induktionsladen eines mobilen Endgeräts auf. Als mobiles Endgerät wird hier in an sich bekannter Weise ein portables Computergerät, insbesondere ein Smartphone oder ein Tablet-PC, verstanden.

In an sich bekannter Weise weist die Ladevorrichtung eine Auflagefläche oder Auflageplatte zum Auflegen des Endgeräts auf. Die Auflageplatte kann Bestandteil einer größeren Struktur sein, beispielsweise einer Mulde oder eines Verkleidungsteils im Innenraum eines Kraftfahrzeugs. Die Auflageplatte ist bevorzugt derart groß oder derart bemessen, dass ein Endgerät in seiner vollen Länge und/oder Breite aufgelegt werden kann oder aufliegen kann. Beispielhafte Maßen sind Kantenlängen in einem Bereich von mehr als 15cm, z.B. in einem Bereich von 15cm bis 25cm. Im aufgelegten Zustand befindet sich das Endgerät dann auf der Auflageplatte. Dieser Raumbereich über der Auflageplatte ist hier als "Auflagevolumen", bezeichnet.

Zu der Ladevorrichtung gehört in an sich bekannter Weise auch eine elektrische Sendespule oder Ladespule, die dazu eingerichtet ist, ein magnetisches Wechselfeld für das Induktionsladen zu erzeugen. Natürlich kann in der Ladevorrichtung auch die entsprechende Leistungselektronik für den Betrieb der elektrischen Sendespule zum Erzeugen des magnetischen Wechselfelds vorgesehen sein. Zum Verständnis der Erfindung ist es aber ausreichend, die elektrische Sendespule zu kennen.

Schließlich ist in der Ladevorrichtung auch eine Magnetanordnung vorgesehen, beispielsweise ein Kreisring oder ein Kreisbogen aus Magneten. Diese Magnetanordnung ist dazu eingerichtet, das Endgerät magnetisch bezüglich der Sendespule mittels eines permanenten oder zumindest während des Induktionsladens zeitinvarianten Magnetfelds der Magnetanordnung zu fixieren. Die Magnetanordnung kann beispielsweise aus Permanentmagneten gebildet sein, wie dies an sich für die bereits genannten Standards bekannt ist. Das Fixieren des Endgeräts ist ermöglicht, während sich das Endgerät auf der Auflageplatte befindet oder dort aufgelegt ist, wenn das Endgerät in dem Auflagevolumen liegt.

Um nun bei dieser Anordnung zu vermeiden, dass beispielsweise durch eine hervorstehende Kamera des Endgeräts ein Luftspalt zwischen Sendespule und dem aufgelegten Endgerät verbleibt, ist erfindungsgemäß vorgesehen, dass die Sendespule und die Magnetanordnung zusammen in einer Halteeinrichtung angeordnet sind. Diese Halteanordnung stellt einen in der Auflageplatte beweglich gelagerten "Ladekopf" dar. Die Halteeinrichtung kann beispielsweise als ein Gehäuse ausgestaltet sein, wie es beispielsweise mittels eines Spritzgussverfahrens aus einem Kunststoff hergestellt sein kann. Die Halteeinrichtung ist beweglich in der Auflageplatte angeordnet, indem in der Auflageplatte eine Aussparung vorgesehen ist, in welcher die Halteeinrichtung angeordnet ist. Die Halteeinrichtung ist somit nicht durch die Auflageplatte verdeckt, sondern kann durch die Aussparung hindurch ein aufgelegtes Endgerät direkt berühren. Die Halteeinrichtung kann beispielsweise als ein Stutzen oder Zylinder oder Puk ausgestaltet sein (insbesondere ein flacher Zylinder, mit einem Durchmesser, der mindestens dreimal größer ist als die Zylinderhöhe). Eine entsprechend runde Aussparung kann dann in der Auflageplatte vorgesehen sein, in welcher dann die Halteeinrichtung angeordnet ist.

Um nun einen Luftspalt zwischen aufgelegtem Endgerät und der Ladevorrichtung zu schließen, ist die Halteeinrichtung mittels einer Lagerung oder Lagereinrichtung in der Aussparung der Auflageplatte beweglich angeordnet, und zwar lässt sich die Halteeinrichtung zumindest entlang einer Spulenachse der Sendespule ganz oder teilweise aus der Aussparung heraus zum Auflagevolumen hin bewegen. Mit anderen Worten kann die Spule entlang ihrer Spulenachse aus der Aussparung herausgleiten oder herausbewegt werden. Die Spulenachse ist virtuelle Linie, die eine Flächennormale der Windungsebene der Windungen der Spule darstellt. Die Sendespule ist insbesondere koplanar oder planparallel zu einer durch die Oberlfäche der Auflageplatte beschriebenen Ebene angeordnet. Die Halteeinrichtung kann durch die Lagereinrichtung dabei beispielsweise motorisch angetrieben sein, beispielsweise mittels eines Elektromotors, und/oder die Lagereinrichtung kann die Halteeinrichtung auch entsprechend lose oder mit Spiel lagern oder halten, sodass die Halteeinrichtung beispielsweise durch das beschriebene permanente Magnetfeld der Magnetanordnung und eine sich hieraus ergebende Magnetkraft aus der Aussparung herausgezogen werden kann. Legt man also ein Endgerät auf die Auflageplatte, so kann nun die Halteeinrichtung durch ihre Lagereinrichtung zumindest entlang der Spulenachse aus der Aussparung heraus hin zum mobilen Endgerät bewegt werden und somit spaltfrei (das heißt ohne Luftspalt dazwischen) an dem Endgerät zum Anliegen kommen oder dort anliegen, insbesondere direkt anliegen, während das Endgerät auf der Auflageplatte aufgelegt oder abgelegt ist.

Durch die Erfindung ergibt sich der Vorteil, dass selbst dann, wenn ein Endgereich im Bereich seiner Empfangsspule nicht vollständig oder spaltfrei auf eine Auflageplatte der Ladevorrichtung aufgelegt werden kann, weil beispielsweise eine abstehende oder hervorstehende Kamera des Endgeräts ein planes Auflegen oder spaltfreies Auflegen verhindert, dennoch die Sendespule durch ihre beweglich gelagerte Halteeinrichtung aus der Aussparung der Auflageplatte heraus an das Endgerät heran bewegt werden kann, wodurch ein Luftspalt vermieden werden kann und das magnetische Wechselfeld der Sendespule somit effizient in das Endgerät und dessen Empfangsspule eindringen oder übertreten kann.

Die Erfindung umfasst auch Weiterentwicklungen, durch die sich zusätzliche Vorteile ergeben.

Falls sich die Kamera oder ein anderer Fortsatz in einem Randbereich der rückseitigen Wandung des Endgeräts befindet, so wird das Endgerät auf der Auflageplatte beim Auflegen gekippt, wodurch die rückseitige Wandung des Endgerät schräg zur Auflageplatte ausgerichtet ist. Um auch diesen Neigungswinkel der rückseitigen Wandung des Endgeräts zu kompensieren, sieht eine Weiterentwicklung vor, dass die Halteeinrichtung durch die Lagereinrichtung bezüglich der Auflageplatte kippbar gelagert ist. Beispielsweise kann die Lagereinrichtung ein entsprechendes Spiel oder Freiraum zum Verkippen der Halteeinrichtung in der Aussparung vorsehen. Zusätzlich oder alternativ dazu kann beispielsweise ein Teil der Lagereinrichtung als Kugelsegment ausgestaltet sein. Die Halteeinrichtung ist also in der Aussparung nicht nur entlang der Spulenachse transversal aus der Aussparung heraus beweglich gelagert, sondern bevorzugt auch neigbar oder verkippbar. Ein maximaler Kippwinkel der Spulenachse, der sich bezüglich einer Flächennormalen der Ebene, in welcher sich die Auflageplatte erstreckt, dadurch ergibt, ist bevorzugt betragsmäßig in einem Bereich von 0 Grad bis 40 Grad. Somit kann die Halteeinrichtung mit derjenigen Haftfläche oder demjenigen Haftbereich, mit dem die Halteeinrichtung durch das permanente Magnetfeld am Endgerät haften soll, auch dann vollflächig direkt anliegen, wenn das Endgerät gekippt oder geneigt auf der Auflageplatte aufliegt.

Die Halteeinrichtung zieht sich nach dem Abnehmen oder Wegnehmen des Endgeräts bevorzugt selbsttätig zurück in die Aussparung der Auflageplatte. Hierzu ist gemäß einer Weiterentwicklung vorgesehen, dass bei leerem Auflagevolumen (wenn also kein Endgerät auf der Auflagefläche aufliegt) die Halteeinrichtung durch ihre Lagereinrichtung schwerkraftbasiert und/oder federbasiert in einer Einzugsstellung gehalten ist, in welcher die Halteeinrichtung in der Aussparung eingezogen ist. Ist die Auflagefläche beispielsweise horizontal ausgerichtet, so kann die Halteeinrichtung durch eine entsprechend lockere oder lose Anordnung (die Lagereinrichtung ist entsprechend lose ausgestaltet) in die Aussparung zurückfallen. Um dies auch beispielsweise bei Vibrationen sicherzustellen, also die Einzugsstellung auch bei Vibrationen zu sichern, kann eine Rückhaltefeder vorgesehen sein, um die Halteeinrichtung in der Einzugsstellung zu halten. Dies ist insbesondere bei der Verwendung der Ladevorrichtung in einem Kraftfahrzeug vorteilhaft, wo während einer Fahrt Schüttelbewegungen ansonsten die Halteeinrichtung in der Aussparung vibrieren oder klappern lassen könnten.

Um beim Auflegen eines Endgeräts die Halteeinrichtung aus der Aussparung heraus hin in das Auflagevolumen, also hin zum Endgerät, zu bewegen, ist als ein besonders robuster und effizienter Mechanismus vorgesehen, da gemäß einer Weiterentwicklung eine Magnetfeldstärke der Magnetanordnung in Bezug zu einem Eigengewicht der Halteeinrichtung und in Bezug zu einer Rückhaltekraft der Lagereinrichtung derart groß ist oder groß genug ist, um die Halteeinrichtung aus ihrer Einzugsstellung heraus oder aus der Halteeinrichtung heraus in eine Auszugsstellung zu ziehen oder zu bewegen, in welcher die Halteeinrichtung in der beschriebenen Weise ganz oder teilweise aus der Aussparung herausragt und dort zu halten. Dies setzt natürlich voraus, dass die Magnetanordnung eine korrespondierende Magnetanordnung oder eine magnetische Anordnung (beispielsweise ein Weicheisenblech) in ihrem permanenten Magnetfeld hat, also dass die Halteeinrichtung an einem magnetischen Endgerät haftet. Somit kann sich die Halteeinrichtung durch das permanente Magnetfeld ihrer Magnetanordnung selbst hin zum Endgerät ziehen. Um dies zu ermöglichen, ist die Halteeinrichtung in der beschriebenen Weise beispielsweise durch eine Wahl des Materials (bevorzugt ein Kunststoff) und/oder einer Materialdicke der Halteeinrichtung und/oder in Bezug auf die Rückhaltekraft der Lagereinrichtung, also beispielsweise die Rückhaltekraft der beschriebenen Federanordnung oder Rückhaltefeder, derart austariert, dass die Magnetfeldstärke der Magnetanordnung dafür ausreicht.

Während eines Ladevorgangs sollte ein elektrischer Energiespeicher des mobilen Endgeräts in einem Temperaturfenster gehalten werden, das auch als "Wohlfühlbereich" des Energiespeichers bezeichnet wird. Dies ist besonders wichtig bei Energiespeichern basierend auf Lithium-Ionen-Akkumulatoren. Um dies zu erreichen, sieht eine Weiterentwicklung vor, dass in der Ladevorrichtung ein Lüfter bereitgestellt ist, der dazu eingerichtet ist, einen Luftstrom durch die Aussparung hindurch, also an einer Außenwand der Halteeinrichtung entlang und/oder durch die Halteeinrichtung hindurch zu fördern. Beispielsweise kann der Luftstrom Luft zwischen aufgelegtem Endgerät und Auflageplatte ansaugen und diese angesaugte Luft durch die Aussparung hindurch an der Halteeinrichtung vorbei und/oder durch diese hindurch in das Innere der Ladevorrichtung ansaugen. Es kann auch ein Blasen hin zum Endgerät vorgesehen sein. Damit der Luftstrom durch die Halteeinrichtung hindurch gefördert wird, kann diese beispielsweise entsprechende Durchgangsöffnungen oder Kanäle aufweisen. Durch Fördern eines Luftstroms im Bereich der Aussparung und der Halteeinrichtung ergibt sich der Vorteil, dass eine Wärmequelle, nämlich die Sendespule und der Wechselbereich zwischen Sendespule und Endgerät, aktiv gekühlt werden.

Um eine Kühlung und einen Luftaustausch zwischen Endgerät (im aufgelegten Zustand) und Auflageplatte zu ermöglichen, sieht eine Weiterentwicklung vor, dass die Auflageplatte Auflagestege oder Auflagerippen für das Endgerät aufweist. Mit anderen Worten berührt das Endgerät mit seiner rückseitigen Wandung hierdurch nicht vollflächig die Auflageplatte, sondern liegt auf einer effektiven Auflagefläche auf, die durch die Stege gegeben ist. Insbesondere ist die Auflagefläche hierdurch auf einen Wert weniger als 20 Prozent, insbesondere weniger als zehn Prozent der gesamten von einem Endgerät abgedeckten oder überdeckten Fläche der Auflageplatte reduziert. Somit kann zwischen Endgerät und Auflageplatte, nämlich zwischen den Auflagestegen oder Auflagerippen hindurch, Luft strömen. Dies kann für Konvektionskühlung vorteilhaft sein. Im Zusammenhang mit dem beschriebenen Lüfter kann der von diesem geförderte Luftstrom auf diese Weise zwischen Endgerät und den Auflagestegen/Auflagerippen hindurch gefördert werden. Durch die verringerte Berührfläche oder die auf die Berührfläche der Auflagestege/Auflagerippen reduzierte Auflagefläche wird auch ein Wärmeübertritt zwischen Auflageplatte und Endgerät reduziert.

Beim Abnehmen des Endgeräts von der Auflageplatte wird bevorzugt verhindert, dass die Halteeinrichtung mit der Sendespule und der Magnetanordnung an dem Endgerät haften bleibt. Hierzu sieht eine Weiterentwicklung vor, dass die Lagereinrichtung, durch welche die Halteeinrichtung bezüglich der Auflageplatte gelagert oder gehalten ist, eine Rückhalteeinrichtung aufweist, die einen Ausziehweg der Halteeinrichtung aus der Aussparung heraus auf eine Weglängen von weniger als drei Zentimeter begrenzt. Beispielsweise kann der Ausziehweg auf einen Wert im Bereich von fünf Millimetern bis 15 Millimetern begrenzt sein. Nimmt ein Nutzer das Endgerät von der Auflageplatte auf, so wird also bei Erreichen des Ausziehwegs die Halteeinrichtung durch die Rückhalteeinrichtung zurückgehalten und der Nutzer zieht damit das Endgerät von der Halteeinrichtung ab. Die Magnetanordnung kann eine Permanentmagnetkraft aufweisen, die dies beispielsweise bei einer Kraft von weniger als zehn Newton, insbesondere weniger als sechs Newton, zulässt.

Um eine solche Rückhalteeinrichtung bereitzustellen, sieht eine Weiterentwicklung vor, dass die Halteeinrichtung einen Ring oder mehrere Laschen vorsieht, durch welche ein Durchmesser der Halteeinrichtung im Bereich der Rückhalteeinrichtung größer als die Aussparung ist. Mit anderen Worten passen also der Ring oder die mehreren Laschen an der Halteeinrichtung nicht durch die Aussparung hindurch. Somit schlägt also die Halteeinrichtung mit dem Ring oder den Laschen an einem Rand der Aussparung an, was dann bedeutet, dass der Ausziehweg erreicht ist.

Der durch die Aussparung hindurch ragende Teil der Halteeinrichtung ist bevorzugt in der beschriebenen Weise als zylindrischer Sockel oder als zylindrisches Kopfstück ausgestaltet, also insbesondere als flacher Zylinder, dessen Durchmesser mindestens viermal so groß ist wie die Höhe oder Länge des Sockels oder Kopfstückes entlang der Spulenachse. Der dem Endgerät oder dem Auflagebereich zugewandte Teil des Sockels oder Kopfstückes weist eine ebene Grundfläche auf, die einen Haftbereich zum magnetischen Anhaften an dem Endgerät darstellt. An einem unteren oder der Grundfläche abgewandten Bereich des Sockels oder Kopfstückes kann dann in der beschriebenen Weise der Ring oder können die Laschen der Rückhalteeinrichtung vorgesehen sein, sodass der Sockel oder das Kopfstück nicht aus der Aussparung heraus gezogen werden kann.

Die Halteeinrichtung ist bezüglich der Auflageplatte bevorzugt gegen eine translatorische Bewegung parallel zur Ebene, in welcher sich die Auflageplatte erstreckt, fixiert. Mit anderen Worten kann die Halteeinrichtung nicht in der Auflageplatte translatorisch seitlich bewegt werden, sondern kann lediglich aus der Halteplatte herausgezogen und bevorzugt dabei noch gekippt werden. Für diese translatorische Fixierung kann beispielsweise eine Form der Aussparung in der Auflageplatte der Form oder der Kontur der Halteeinrichtung dahingehend entsprechen, dass ein Spiel in die translatorische Bewegungsrichtung kleiner als drei Millimeter, insbesondere kleiner als zwei Millimeter, ist. Hierdurch ist dann noch die Kippbewegung ermöglicht, aber eine translatorische Bewegung um mehr als dieses Spiel ist dann blockiert. Die Fixierung bezüglich translatorischer Bewegung weist den Vorteil auf, dass das Endgerät im aufgelegten Zustand nicht auf der Auflageplatte "umherwandern" kann, also dort nicht verrutscht, wie es beispielsweise in einem Kraftfahrzeug bei einer Fahrt über unebenen Fahruntergrund durch Vibrationen ansonsten verursacht werden könnte.

Wie bereits ausgeführt, sieht eine weitere Lösung der Erfindung das beschriebene Kraftfahrzeug vor, in welcher zumindest eine Ladevorrichtung der beschriebenen Art bereitgestellt ist. In einem Kraftfahrzeug ist diese Ladevorrichtung besonders vorteilhaft, weil ein Endgerät auf der Auflageplatte abgelegt werden kann, beispielsweise in einem Bereich einer Mittelkonsole, und dort mittels eines Induktionsladens nachgeladen werden kann.

Die jeweilige Auflageplatte jeder Ladevorrichtung ist in dem Kraftfahrzeug bevorzugt in einer horizontalen Ebene ausgerichtet oder in einer Ebene, deren Normalenvektor einen Winkel von weniger als 20 Grad zur Vertikalen aufweist.

Mit anderen Worten liegt also das Endgerät flach oder horizontal oder zumindest um weniger als die beschriebene Neigung geneigt im Kraftfahrzeug auf der Auflageplatte ausgerichtet. Somit kann auch beispielsweise bei einer Fahrt durch ein Schlagloch sichergestellt sein, dass das Endgerät an der Halteeinrichtung haften bleibt, was bei einer stärker oder weiter gekippten Stellung aufgrund der auftretenden Ruckkräfte nicht sichergestellt sein muss.

Wenn die Ladevorrichtung betrieben wird, ergibt sich das ebenfalls zur Erfindung gehörende Verfahren, bei welchem ein mobiles Endgerät verwendet wird, das in seiner rückseitigen Wandung, die der Auflageplatte der Ladevorrichtung zugewandt ist, die Empfangsspule für das Induktionsladen und eine magnetische Fixiereinrichtung (beispielsweise einen Ring aus Permanentmagneten und/oder ein weichmagnetisches Blech) aufweist. Dieses mobile Endgerät tritt beim Auflegen auf die Auflageplatte mittels seiner Fixiereinrichtung in eine magnetische Wechselwirkung mit der Halteeinrichtung der Ladevorrichtung, die ja auch eine Magnetanordnung mit einem permanentmagnetischen Magnetfeld aufweist. Durch eine hierbei entstehende Magnetkraft der Wechselwirkung wird die Halteeinrichtung ganz oder teilweise aus der Aussparung der Auflageplatte heraus gezogen und zudem wird das Endgerät in eine vorgegebene Relativposition zu der Sendespule der Halteeinrichtung gezogen. Mit anderen Worten "finden sich" die Empfangsspule und die Sendespule durch die magnetische Wechselwirkung zwischen Endgerät und Halteeinrichtung. Das Endgerät kann dann auch derart fixiert auf der Auflageplatte abgelegt werden, wobei es egal ist oder kompensiert werden kann, wenn die Wandung nicht voll auf der Auflageplatte aufliegen kann, weil beispielsweise eine Kamera des Endgeräts von der Wandung absteht oder hervorsteht. Die Halteeinrichtung kann beispielsweise entsprechend gekippt werden, um dennoch spaltfrei an der Wandung des Endgeräts mit dem Haftbereich oder der Haftfläche anzuliegen.

Die Erfindung umfasst auch Weiterbildungen des Verfahrens, wie sie sich durch die entsprechenden Weiterbildungen der erfindungsgemäßen Ladevorrichtung ergeben. Aus diesem Grund sind die entsprechenden Merkmale der Weiterbildungen des Verfahrens hier nicht noch einmal beschrieben.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs mit einer Ladevorrichtung, deren Halteeinrichtung einmal in einer Einzugsstellung und einmal in einer Auszugsstellung dargestellt ist;
- Fig. 2: die Ladevorrichtung von Fig. 1 in einer Seitenansicht mit der Halteeinrichtung einmal in der Einzugsstellung und einmal in der Auszugsstellung;
- Fig. 3: eine schematische Darstellung eines Auflegevorgangs eines mobilen Endgeräts auf die Ladevorrichtung, wodurch sich eine Ausführungsform des beschriebenen Verfahrens ergibt;
- Fig. 4: eine schematische Darstellung eines Längsschnitts der Ladevorrichtung mit einer einen Lüfter aufweisenden Kühleinrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

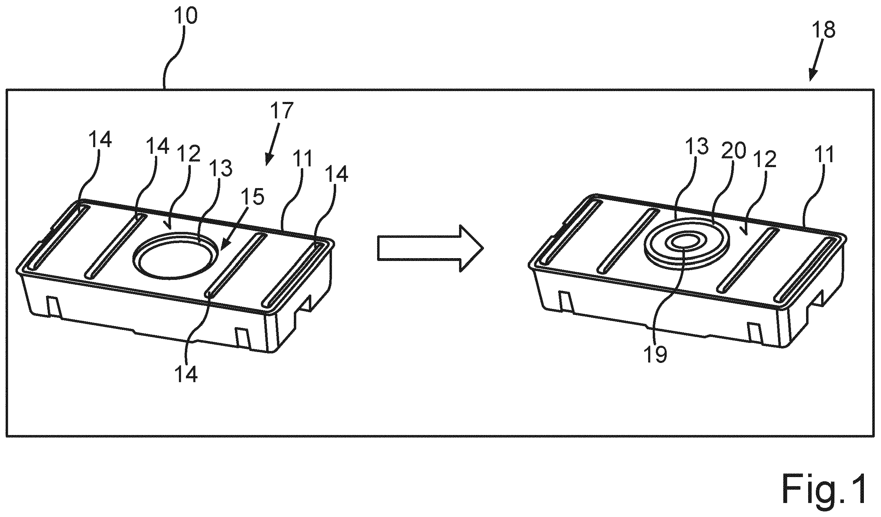

Fig. 1 zeigt ein Kraftfahrzeug 10, bei dem es sich um einen Kraftwagen, insbesondere einen Personenkraftwagen oder Lastkraftwagen, handeln kann. In dem Kraftfahrzeug 10 kann eine Ladevorrichtung 11 bereitgestellt sein, die in der Fig. in zwei unterschiedlichen Zuständen dargestellt ist.

Die Ladevorrichtung 11 kann beispielsweise in einer Mittelkonsole oder in einer Rückbank oder in einer Innenverkleidung einer Fahrzeugtür bereitgestellt sein, um nur beispielhafte Verbauorte zu nennen. Die Ladevorrichtung 11 kann eine Auflagefläche für ein mobiles Endgerät aufweisen, die durch eine Auflageplatte 12 gebildet sein kann. Die Auflageplatte 12 kann Auflagestege 14 aufweisen.

Für ein induktives Laden kann eine Halteeinrichtung 13 bereitgestellt sein, die in einer Aussparung 15 der Auflageplatte 12 versenkt angeordnet sein kann. Die Aussparung 15 kann beispielsweise als Bohrung oder bei einem Spritzgussverfahren in der Auflageplatte 12 ausgespart worden sein kann.

Die Halteeinrichtung 13 kann beispielsweise als ein flacher Zylinder in der beschriebenen Weise, das heißt mit einem Stutzen oder als Ladekopf, ausgestaltet sein. In einer Einzugsstellung 17 kann die Halteeinrichtung 13 in der Aussparung 15 derart versenkt sein, dass die Halteeinrichtung 13 plan oder bündig mit der Auflageplatte 12 abschließt. Hierdurch ist verhindert, dass an einer hervorstehenden Kante der Halteeinrichtung 13 ein Gegenstand anecken kann und es kann sich auch kein Schmutz an einer Kante ansammeln. In einer Auszugsstellung 18 kann die Halteeinrichtung 13 dagegen aus der Aussparung ausgefahren sein. Diese Auszugsstellung 18 nimmt die Halteeinrichtung insbesondere ein, wenn ein Endgerät mit magnetischer Rückwandung auf der Auflageplatte 12 aufliegt.

In die Halteeinrichtung 13 können eine Sendespule 19 für Induktionsladen und eine Magnetanordnung 20, beispielsweise ein Ring aus Permanentmagneten, eingebettet oder integriert sein. Eine Leistungselektronik für den Betrieb der Sendespule 19 kann in an sich bekannter Weise bereitgestellt sein. Sie ist hier nicht weiter für die Erläuterung der Erfindung relevant.

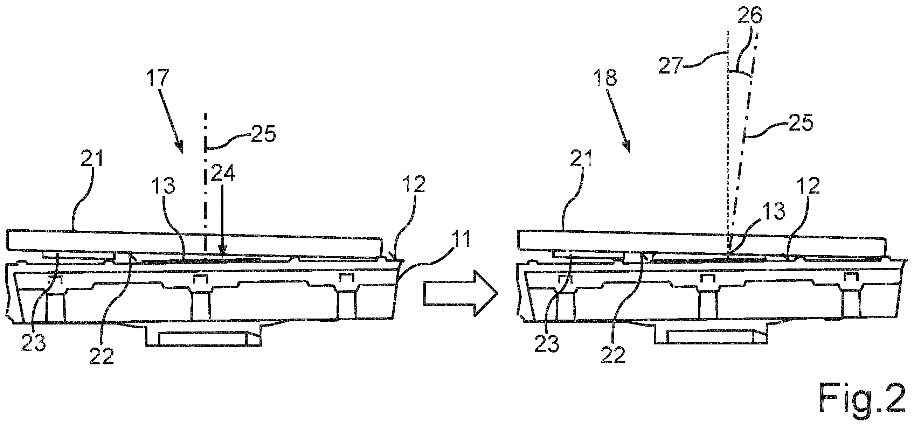

Fig. 2 zeigt in einer Seitenansicht, wie bei aufgelegtem Endgerät 21 eine der Auflageplatte 12 zugewandte rückseitige Wandung 22 des Endgeräts 21 schräg bezüglich der Auflageplatte 12 ausgerichtet sein kann, weil beispielsweise eine Kamera 23 des Endgeräts 21 an der Wandung 22 hervorsteht. Nimmt die Halteeinrichtung 13 die Auszugsstellung 18 ein, so kann dennoch verhindert werden, dass ein Luftspalt 24 zwischen Halteeinrichtung 13 und Wandung 22 des Endgeräts 21 verbleibt. Die Halteeinrichtung 13 kann zum Wechseln in die Auszugsstellung 18 hierbei entlang einer Spulenachse 25 der Sendespule 19 ausgefahren oder ausgezogen sein und zusätzlich um einen Kippwinkel 26 bezüglich der Vertikalen 27 geneigt oder gekippt sein.

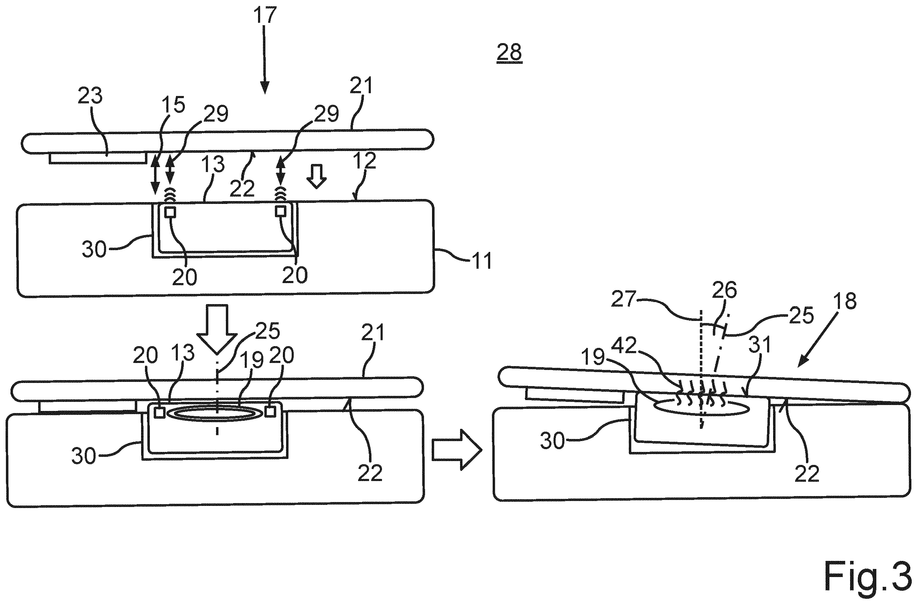

Fig. 3 veranschaulicht diesen den Anpassungsvorgang oder Auszugsvorgang 28, durch welchen die Halteeinrichtung 13 aus der Aussparung 15 aus der Auflageplatte 12 ausgezogen wird. Nähert sich das Endgerät 21 der Auflageplatte 12 an, so kann es durch eine magnetische Fixiereinrichtung in dem Endgerät 21, beispielsweise weitere Permanentmagneten, und die Magnetanordnung 20 in der Halteeinrichtung 13 zu einer magnetischen Wechselwirkung 29 kommen, durch welche eine Magnetkraft auf die Halteeinrichtung 13 wirkt. Eine Lagereinrichtung 30 für die Halteeinrichtung 13 hält diese in Bezug auf die Auflageplatte 12 entlang der Spulenachse 25 translatorisch beweglich sowie bevorzugt auch kippbar gelagert, sodass in der Auszugsstellung 18 die Halteeinrichtung 13 derart weit aus der Aussparung 15 der Auflageplatte 12 ausgezogen oder ausgefahren ist, dass sie mit einer Berührfläche 31 vollständig direkt an der Wandung 22 des Endgeräts 21 anliegt. Somit kann ein durch die Sendespule 19 erzeugtes magnetisches Wechselfeld 42 die Empfangsspule des Endgeräts 21 effizient oder besonders verlustarm durchdringen.

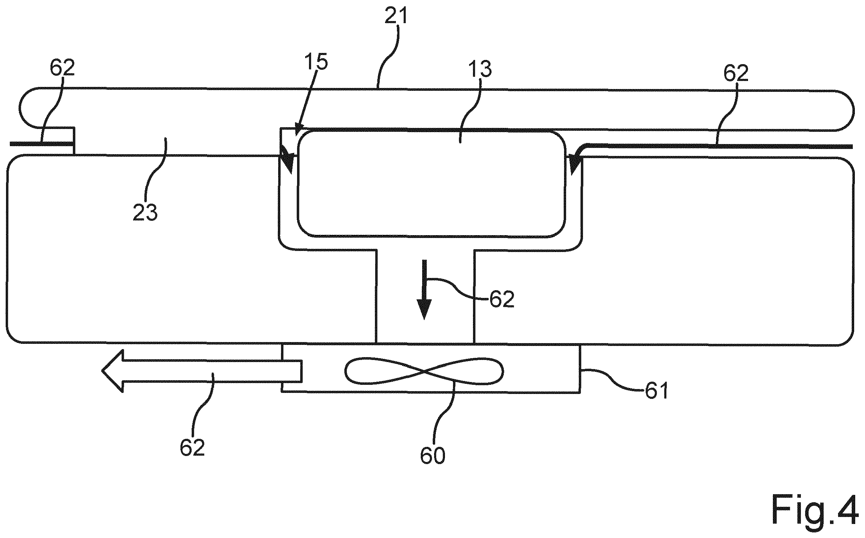

Wie in Fig. 4 dargestellt, wird während des nach dem Auflegen durchgeführten Ladevorgangs wird bevorzugt ein Lüfter 60 einer Kühleinrichtung 61 betrieben, durch welchen ein Luftstrom 62 durch die Aussparung 15 hindurch und damit an der Halteeinrichtung 13 vorbei und/oder durch diese hindurch in die Ladevorrichtung 11 hinein gesogen wird oder aus dieser ausgestoßen wird, sodass zwischen mobilem Endgerät 21 und der Auflageplatte 12 der kühlender Luftstrom 62 gefördert wird.

Die Umsetzung im Fahrzeug sieht gemäß einer bevorzugten Implementierungsform wir folgt aus.

Im Fahrzeug wird eine Ablagefläche zur Verfügung gestellt, die die Elektronik, die Kühlung und die Sendespulen enthält. Die Oberfläche der Auflagefläche oder Ablagefläche ist bevorzugt rutschhemmend ausgeführt. Sie hält bevorzugt einen Abstand zwischen Telefon und Oberfläche um diese mittels Lüfter zu kühlen, beispielsweise mittels Auflagestegen oder Auflagerippen.

Zusätzlich haben die meisten Telefone eine Kamera, die an einer fast beliebigen Stelle liegen kann. Daraus ergibt sich das Problem, dass die Spule mit dem Magnet unterschiedliche Abstände zum Telefon haben kann. Um die Ladefunktion und die Positionierung des Telefons sicherzustellen, muss die Sendespule vollständig an der Spule des Telefons anliegen.

Die Sendespule wird dazu mit umlaufendem Magnet kann sich entlang der Spulenachse nach oben bewegen. Bevorzugt kann sie zusätzlich seitlich geneigt oder gekippt werden.

Insgesamt zeigen die Beispiele, wie ein Wireless Charger (Ladevorrichtung zum Induktionsladen) für einen der Standards MagSafe und Qi2 (MPP qi Standard) in eine Kraftfahrzeug bereitgestellt werden kann.

## Patentansprüche

1. Ladevorrichtung (11) zum Induktionsladen eines mobilen Endgeräts (21), wobei die Ladevorrichtung (11) aufweist:
eine Auflageplatte (12) zum Auflegen des Endgeräts (21) in einem Auflagevolumen, und
eine elektrische Sendespule (19) zum Erzeugen eines magnetischen Wechselfelds (42) für das Induktionsladen und
eine Magnetanordnung (20) zum magnetischen Fixieren des Endgeräts (21) bezüglich der Sendespule (19) mittels eines permanenten Magnetfelds der Magnetanordnung (20), während das Endgerät (21) auf der Auflageplatte (12) aufgelegt ist,
**dadurch gekennzeichnet, dass**
die Sendespule (19) und die Magnetanordnung (20) zusammen in einer Halteeinrichtung (13) angeordnet sind, die in einer Aussparung (15) der Auflageplatte (12) angeordnet ist und die mittels einer Lagereinrichtung (30) in der Aussparung (15) entlang einer Spulenachse (25) der Sendespule (19) ganz oder teilweise aus der Aussparung (15) heraus zum Auflagevolumen hin beweglich gelagert ist.

2. Ladevorrichtung (11) nach Anspruch 1, wobei die Halteeinrichtung (13) durch die Lagereinrichtung (30) bezüglich der Auflageplatte (12) kippbar gelagert ist.

3. Ladevorrichtung (11) nach einem der vorhergehenden Ansprüche, wobei bei leerem Auflagevolumen die Halteeinrichtung (13) durch die Lagereinrichtung (30) schwerkraftbasiert und/oder federbasiert in einer Einzugsstellung (17) gehalten ist, in welcher die Halteeinrichtung (13) in der Aussparung (15) eingezogen ist.

4. Ladevorrichtung (11) nach einem der vorhergehenden Ansprüche, wobei eine Magnetfeldstärke der Magnetanordnung (20) in Bezug zu einem Eigengewicht der Halteeinrichtung (13) und in Bezug zu einer Rückhaltekraft der Lagereinrichtung (30) groß genug ist, um die Halteeinrichtung (13) in einer Auszugsstellung (18), in welcher sie aus der Aussparung (15) herausragt, zu halten, falls die Magnetanordnung (20) an einem magnetischen Endgerät (21) haftet.

5. Ladevorrichtung (11) nach einem der vorhergehenden Ansprüche, wobei in der Ladevorrichtung (11) ein Lüfter (60) bereitgestellt ist, der dazu eingerichtet ist, einen Luftstrom (62) durch die Aussparung (15) hindurch an einer Außenwand der Halteeinrichtung (13) entlang und/oder durch die Halteeinrichtung (13) hindurch zu fördern.

6. Ladevorrichtung (11) nach einem der vorhergehenden Ansprüche, wobei die Auflageplatte (12) Auflagestege (14) für das Endgerät (21) aufweist.

7. Ladevorrichtung (11) nach einem der vorhergehenden Ansprüche, wobei die Lagereinrichtung (30) eine Rückhalteeinrichtung (13) aufweist, die einen Ausziehweg der Halteeinrichtung (13) aus der Aussparung (15) heraus auf eine Weglänger von weniger als 3 Zentimeter begrenzt.

8. Ladevorrichtung (11) nach Anspruch 7, wobei die Rückhalteeinrichtung (13) einen Ring oder mehrere Laschen an der Halteeinrichtung (13) vorsieht, durch welche ein Durchmesser der Halteeinrichtung (13) im Bereich der Rückhalteeinrichtung (13) größer als die Aussparung (15) ist.

9. Ladevorrichtung (11) nach einem der vorhergehenden Ansprüche, wobei die Halteinrichtung als zylindrischer Sockel oder als zylindrisches Kopfstück mit einer ebenen Grundfläche als Haftbereich zum magnetischen Anhaften an das Endgerät (21) ausgestaltet ist.

10. Ladevorrichtung (11) nach einem der vorhergehenden Ansprüche, wobei die Halteeinrichtung (13) gegen eine translatorische Bewegung parallel zu einer Ebene, in welcher sich die Auflageplatte (12) erstreckt, fixiert ist.

11. Kraftfahrzeug (10) mit zumindest einer Ladevorrichtung (11) nach einem der vorhergehenden Ansprüche.

12. Kraftfahrzeug (10) nach Anspruch 11, wobei eine jeweilige Auflageplatte (12) in einer horizontalen Ebene oder in einer Ebene, deren Normalenvektor einen Winkel von weniger als 20 Grad zur Vertikalen (27) aufweist, angeordnet ist.

13. Verfahren zum Betreiben einer Ladevorrichtung (11) nach einem der Ansprüche 1 bis 10, wobei ein mobiles Endgerät (21), das in einer Wandung (22), die einer Auflageplatte (12) der Ladevorrichtung (11) zugewandt ist, eine Empfangsspule für Induktionsladen und eine magnetische Fixiereinrichtung aufweist, beim Auflegen auf die Auflageplatte (12) mittels der Fixiereinrichtung in eine magnetische Wechselwirkung (29) mit einer Halteeinrichtung (13) der Ladevorrichtung (11) tritt und durch eine Magnetkraft der Wechselwirkung (29) die Halteeinrichtung (13) ganz oder teilweise aus einer Aussparung (15) herauszieht und das Endgerät (21) in eine vorgegebene Relativposition zu einer Sendespule (19) der Halteeinrichtung (13) zieht.

## Claims

1. A charging device (11) for the inductive charging of a mobile terminal device (21), the charging device (11) comprising:
a support plate (21) for supporting the terminal device (12) in a support volume, and
an electrical transmission coil (19) for generating an alternating magnetic field (42) for the inductive charging and
a magnet assembly (20) for magnetically securing the terminal device (21) relative to the transmission coil (19) by means of a permanent magnetic field of the magnet assembly (20) while the terminal device (21) is supported on the support plate (12), **characterized in that**
the transmission coil (19) and the magnet assembly (20) are arranged together in a holding apparatus (13), which is arranged in a cut-out (15) in the support plate (12) and is mounted by means of a bearing apparatus (30) in the cut-out (15) so as to be movable out of the cut-out (15) toward the support volume in full or in part along a coil axis (25) of the transmission coil (19).

2. The charging device (11) according to claim 1, wherein the holding apparatus (13) is mounted by the bearing apparatus (30) to be tiltable relative to the support plate (12).

3. The charging device (11) according to any of the preceding claims, wherein when the support volume is empty, the holding apparatus (13) is held in a pulled-in position (17), in which the holding apparatus (13) is pulled into the cut-out (15), by the bearing apparatus (30) in a gravity-based and/or spring-based manner.

4. The charging device (11) according to any of the preceding claims, wherein a magnetic field strength of the magnet assembly (20) is great enough in relation to the dead weight of the holding apparatus (13) and in relation to a retaining force of the bearing apparatus (30) in order to hold the holding apparatus (13) in a pulled-out position (18) in which it protrudes from the cut-out (15) if the magnet assembly (20) is adhered to a magnetic terminal device (21).

5. The charging device (11) according to any of the preceding claims, wherein a fan (60) configured to guide an air flow (62) through the cut-out (15) on an outer wall of the holding apparatus (13) and/or through the holding apparatus (13) is provided in the charging device (11).

6. The charging device (11) according to any of the preceding claims, wherein the support plate (12) comprises support bars (14) for the terminal device (21).

7. The charging device (11) according to any of the preceding claims, wherein the bearing apparatus (30) comprises a retaining apparatus (13), which limits a pull-out distance of the holding apparatus (13) out of the cut-out (15) to a distance of less than 3 centimeters.

8. The charging device (11) according to claim 7, wherein the retaining apparatus (13) provides a ring or a plurality of tabs on the holding apparatus (13), because of which a diameter of the holding apparatus (13) in the region of the retaining apparatus (13) is greater than the cut-out (15).

9. The charging device (11) according to any of the preceding claims, wherein the holding apparatus is designed as a cylindrical base or a cylindrical top piece comprising a flat base surface as an adhesive region for magnetically adhering to a terminal device (21).

10. The charging device (11) according to any of the preceding claims, wherein the holding apparatus (13) is secured against a translational movement in parallel with a plane in which the support plate (12) extends.

11. A motor vehicle (10) comprising at least one charging device (11) according to any of the preceding claims.

12. The motor vehicle (10) according to claim 11, wherein a respective support plate (12) is arranged in a horizontal plane or in a plane of which the normal vector has an angle of less than 20 degrees to the vertical (27).

13. A method for operating a charging device (11) according to any of claims 1 to 10, wherein a mobile terminal device (21), which comprises a receiving coil for inductive charging and a magnetic securing apparatus in a wall (22) facing a support plate (12) of the charging device (11), comes into magnetic interaction (29) with a holding apparatus (13) of the charging device (11) by means of the securing apparatus when it is placed onto the support plate (12), and pulls the holding apparatus (13) out of a cut-out (15) in full or in part by a magnetic force of the interaction (29) and pulls the terminal device (21) into a predetermined position relative to a transmission coil (19) of the holding apparatus (13).

## Revendications

1. Dispositif de charge (11) pour la charge par induction d'un terminal mobile (21), le dispositif de charge (11) comprenant :
une plaque de support (12) pour supporter le dispositif terminal (21) dans un volume de support, et
une bobine (19) de transmission électrique pour générer un champ magnétique alternatif (42) pour la charge par induction, et
un agencement d'aimant (20) pour fixer magnétiquement le dispositif terminal (21) par rapport à la bobine (19) de transmission au moyen d'un champ magnétique permanent de l'agencement d'aimant (20), tandis que le dispositif terminal (21) est supporté sur la plaque de support (12),
**caractérisé en ce que**
la bobine (19) de transmission et l'agencement d'aimant (20) sont disposés ensemble dans un dispositif de maintien (13) qui est disposé dans un évidement (15) de la plaque de support (12) et qui est monté, au moyen d'un dispositif de palier (30) dans l'évidement (15), le long d'un axe de bobine (25) de la bobine (19) de transmission, entièrement ou partiellement hors de l'évidement (15) vers le volume de support.

2. Dispositif de charge (11) selon la revendication 1, dans lequel le dispositif de maintien (13) est monté de manière à pouvoir basculer par rapport à la plaque d'appui (12) par l'intermédiaire du dispositif de palier (30).

3. Dispositif de charge (11) selon l'une des revendications précédentes, dans lequel, lorsque le volume de support est vide, le dispositif de maintien (13) est maintenu par l'intermédiaire du dispositif de support (30), par gravité et/ou par ressort, dans une position rétractée (17) dans laquelle le dispositif de maintien (13) est rétracté dans l'évidement (15).

4. Dispositif de charge (11) selon l'une des revendications précédentes, dans lequel une intensité du champ magnétique de l'agencement d'aimant (20) est suffisamment élevée, par rapport au poids propre du dispositif de maintien (13) et par rapport à une force de retenue du dispositif de support (30), pour maintenir le dispositif de maintien (13) dans une position d'extraction (18), dans laquelle il fait saillie de l'évidement (15), si l'agencement d'aimant (20) adhère à un dispositif terminal (21) magnétique.

5. Dispositif de charge (11) selon l'une des revendications précédentes, dans lequel un ventilateur (60) est fourni dans le dispositif de charge (11), qui est conçu pour acheminer un flux d'air (62) à travers l'évidement (15) le long d'une paroi extérieure du dispositif de maintien (13) et/ou à travers le dispositif de maintien (13).

6. Dispositif de charge (11) selon l'une des revendications précédentes, dans lequel la plaque de support (12) comprend des nervures de support (14) pour le dispositif terminal (21).

7. Dispositif de charge (11) selon l'une des revendications précédentes, dans lequel le dispositif de support (30) comprend un dispositif de retenue (13) qui limite la course d'extraction du dispositif de maintien (13) hors de l'évidement (15) à une longueur de course inférieure à 3 centimètres.

8. Dispositif de charge (11) selon la revendication 7, dans lequel le dispositif de retenue (13) fournit un anneau ou plusieurs pattes sur le dispositif de maintien (13), grâce auxquels le diamètre du dispositif de maintien (13) dans la zone du dispositif de retenue (13) est supérieur à celui de l'évidement (15).

9. Dispositif de charge (11) selon l'une des revendications précédentes, dans lequel le dispositif de maintien est conçu sous la forme d'un socle cylindrique ou d'une tête cylindrique présentant une surface de base plane en tant que zone d'adhérence pour l'adhérence magnétique au dispositif terminal (21).

10. Dispositif de charge (11) selon l'une des revendications précédentes, dans lequel le dispositif de maintien (13) est immobilisé contre tout mouvement de translation parallèle à un plan dans lequel s'étend la plaque de support (12).

11. Véhicule automobile (10) comprenant au moins un dispositif de charge (11) selon l'une des revendications précédentes.

12. Véhicule automobile (10) selon la revendication 11, dans lequel une plaque de support (12) respective est disposée dans un plan horizontal ou dans un plan dont le vecteur normal forme un angle inférieur à 20 degrés par rapport à la verticale (27).

13. Procédé de fonctionnement d'un dispositif de charge (11) selon l'une des revendications 1 à 10, dans lequel un dispositif terminal (21) mobile, qui comprend, dans une paroi (22) faisant face à une plaque de support (12) du dispositif de charge (11), une bobine de réception pour la charge par induction et un dispositif de fixation magnétique, entre en interaction magnétique (29) avec un dispositif de maintien (13) du dispositif de charge (11) lorsqu'il est placé sur la plaque de support (12) au moyen du dispositif de fixation, et, sous l'effet d'une force magnétique de l'interaction (29), extrait le dispositif de maintien (13) entièrement ou partiellement d'un évidement (15) et tire le dispositif terminal (21) dans une position relative prédéfinie par rapport à une bobine (19) de transmission du dispositif de maintien (13).
